# EUROPÄISCHE PATENTANMELDUNG

(11) **EP 1 775 974 A2**
(43) Veröffentlichungstag der Anmeldung: **18.04.2007**
(21) Anmeldenummer: 06020804.8
(22) Anmeldetag: 04.10.2006
(51) Int. Cl.: H04Q 7/32

(54) **Betrieb von in Mobilfunknetzen nutzbaren mobilen Endgeräten**

(30) Priorität: 14.10.2005 DE 102005049697
(71) Anmelder: Vodafone Holding GmbH, 40213 Düsseldorf (DE)
(72) Erfinder: Rosenberger, Frank, 40668 Meerbusch (DE)
(74) Vertreter: Weisbrodt, Bernd

(57) **Zusammenfassung**

Die vorliegende Erfindung betrifft ein Verfahren zum Betreiben von in Mobilfunknetzen (15) gemäß dem GSM- und/oder UMTS-Funknetzstandard nutzbaren mobilen Endgeräten (1,2), wobei seitens eines mobilen Endgerätes (1,2) wenigstens ein Anwendungsprogramm (7,8,9,10,11,12,13,14) mittels einer Recheneinrichtung ausführbar ist und/oder seitens eines mobilen Endgerätes (1,2) in wenigstens einer Datenbank (7,8,9,10,11,12,13,14) von und/oder mit einem Anwendungsprogramm (7,8,9,10,11,12,13,14) nutzbare Daten (9,10,11,12,13,14) erfassbar sind. Um umfassende nutzerindividuelle Betriebsnutzungen von in Mobilfunknetzen (15) nutzbaren mobilen Endgeräten (1,2) zu ermöglichen, werden wenigstens zwei mobile Endgeräte (1,2) mit wenigstens einer über das Mobilfunknetz (15) erfolgenden Kommunikationsverbindung (16) miteinander verbunden und wenigstens ein seitens eines mobilen Endgerätes (1) mittels einer Recheneinrichtung ausführbares Anwendungsprogramm (7,9,11,13) und/oder die in wenigstens einer Datenbank (9,11,13) eines mobilen Endgerätes (1) erfassten von und/oder mit einem Anwendungsprogramm (7,8,9,10,11,12,13,14) nutzbaren Daten seitens des wenigstens einen weiteren mobilen Endgerätes (2) über die Kommunikationsverbindung (16) genutzt.

## Beschreibung

Die vorliegende Erfindung betrifft ein Verfahren zum Betreiben von in Mobilfunknetzen gemäß dem GSM- und/oder UMTS-Funknetzstandard (GSM: Global System for Mobile Communications; UMTS: Universal Mobile Telecommunications System) nutzbaren mobilen Endgeräten, wobei seitens eines mobilen Endgerätes wenigstens ein Anwendungsprogramm mittels einer Recheneinrichtung ausführbar ist und/oder seitens eines mobilen Endgerätes in wenigstens einer Datenbank von und/oder mit einem Anwendungsprogramm nutzbare Daten erfassbar sind.

Ferner betrifft die vorliegende Erfindung ein Mobilfunknetz gemäß dem GSM- und/oder UMTS-Funknetzstandard, dessen Einrichtungen für den Aufbau und/oder die Aufrechterhaltung von Kommunikationsverbindungen zur Ausführung eines erfindungsgemäßen Verfahrens ausgebildet sind.

Darüber hinaus betrifft die vorliegende Erfindung ein mobiles Endgerät zur Nutzung in Mobilfunknetzen gemäß dem GSM- und/oder UMTS-Funknetzstandard, welches eine Recheneinrichtung zur Ausführung eines Anwendungsprogramms, wenigstens eine Datenbank mit darin erfassten, von einem Anwendungsprogramm nutzbaren Daten, eine Anzeigeeinrichtung zur optischen und/oder akustischen Wiedergabe von Informationen und/oder wenigstens eine Eingabeeinrichtung zur Erfassung von Informationen aufweist und zur Ausführung eines erfindungsgemäßen Verfahrens in einem erfindungsgemäßen Mobilfunknetz ausgebildet ist.

Der bisher im Stand der Technik bekannte Betrieb von in Mobilfunknetzen nutzbaren mobilen Endgeräten ermöglicht lediglich eine zum Austausch von Sprache und/oder Daten dienende Kommunikation zwischen zwei und/oder mehreren Kommunikationspartnern beziehungsweise deren jeweiligen Endgeräten mittels zentraler Vermittlungseinheiten, bei Mobilfunknetzen gemäß dem GSM-Funknetzstandard insbesondere dem MSC (Mobile Swichting Center), SMSC (Short Message Service Center) oder dergleichen zentrale Vermittlungseinheiten. Dabei werden Sprache und/oder Daten mittels einer im Mobilfunknetz liegenden zentralen Vermittlungseinheit aufgebauten Kommunikationsverbindung zwischen den jeweiligen mobilen Endgeräten über die zentrale Vermittlungseinheit ausgetauscht, beispielsweise Nachrichten mittels SMS (SMS: Short Message Service) oder MMS (MMS: Multimedia Message Service).

Ferner sind im Stand der Technik in Mobilfunknetzen nutzbare mobile Endgeräte bekannt, welche neben einer über das Mobilfunknetz erfolgenden Kommunikationsverbindung über eine drahtlose Verbindung im Kurzstreckenfunkbereich, insbesondere gemäß einer Bluetooth-Spezifikation, oder mittels Infrarotverbindung direkt miteinander verbindbar sind. Abgesehen von den begrenzten Reichweiten und Datenübertragungsraten derartiger drahtloser Verbindungen ist nachteilig, dass diese hinsichtlich der Nutzung Sicherheitslücken in der Verbindung aufweisen.

Der Erfindung liegt in Anbetracht dieses Standes der Technik die Aufgabe zugrunde, unter Meidung der beschriebenen Nachteile umfassendere nutzerindividuelle Betriebsnutzungen von in Mobilfunknetzen nutzbaren mobilen Endgeräten zu ermöglichen.

Zur technischen **Lösung** dieser Aufgabe wird erfindungsgemäß ein Verfahren zum Betreiben von in Mobilfunknetzen gemäß dem GSM- und/oder UMTS-Funknetzstandard nutzbaren mobilen Endgeräten, wobei seitens eines mobilen Endgerätes wenigstens ein Anwendungsprogramm mittels einer Recheneinrichtung ausführbar ist und/oder seitens eines mobilen Endgerätes in wenigstens einer Datenbank von und/oder mit einem Anwendungsprogramm nutzbare Daten erfassbar sind, vorgeschlagen, wobei wenigstens zwei mobile Endgeräte mit wenigstens einer über das Mobilfunknetz erfolgenden Kommunikationsverbindung miteinander verbunden und wenigstens ein seitens eines mobilen Endgerätes mittels einer Recheneinrichtung ausführbares Anwendungsprogramm und/oder die in wenigstens einer Datenbank eines mobilen Endgerätes erfassten von und/oder mit einem Anwendungsprogramm nutzbaren Daten seitens des wenigstens einen weiteren mobilen Endgerätes über die Kommunikationsverbindung genutzt werden.

Erfindungsgemäß wird ein direkter Austausch von Sprache und/oder Daten zwischen wenigstens zwei über das Mobilfunknetz verbundener Endgeräte realisiert. Dabei wird vorteilhafterweise eine definierte Nutzung von seitens eines mobilen Endgerätes vorhandener, mittels einer Recheneinrichtung ausführbarer Anwendungsprogramme und/oder in einer Datenbank eines mobilen Endgerätes erfasster Daten über das Mobilfunknetz von einem anderen mobilen Endgerät aus ermöglicht. Der Erfindung liegt die Erkenntnis zugrunde, dass durch die erfindungsgemäße Ausgestaltung einer direkten Kommunikationsverbindung über das Mobilfunknetz zwischen zwei mobilen Endgeräten umfassende nutzerindividuelle Betriebsnutzungen von in Mobilfunknetzen nutzbaren mobilen Endgeräten ermöglicht werden, welche insbesondere dem nutzerseitig gegebenen fortwährenden Bedarf an neuen Diensten und/oder gerecht werden.

Vorteilhafterweise wird im Rahmen der Nutzung seitens des einen mobilen Endgerätes wenigstens ein Anwendungsprogramm mittels einer Recheneinrichtung des einen mobilen Endgerätes ausgeführt. Erfindungsgemäß wird dabei auf dem einen mobilen Endgerät ein Anwendungsprogramm ausgeführt und die von beziehungsweise mit dem Anwendungsprogramm bereitgestellten Nutzungen, insbesondere von dem Anwendungsprogramm im Rahmen seiner Ausführung bereitgestellte beziehungsweise nutzbare Daten, seitens des wenigstens einen weiteren mobilen Endgerätes über die direkte Kommunikationsverbindung nutzbar. In einer weiteren vorteilhaften Ausgestaltung der Erfindung wird die Ausführung des Anwendungsprogramms seitens des einen mobilen Endgerätes, also seitens des das Anwendungsprogramms ausführenden mobilen Endgerätes, und/oder des wenigstens einen weiteren mobilen Endgerätes, also seitens des wenigstens einen weiteren, die Ergebnisse des Anwendungsprogramms über die direkte Kommunikationsverbindung nutzenden mobilen Endgerätes, initiiert.

Gemäß einer weiteren vorteilhaften Ausgestaltung der Erfindung werden die in wenigstens einer Datenbank des einen mobilen Endgerätes erfassten von und/oder mit einem Anwendungsprogramm nutzbaren Daten über die Kommunikationsverbindung seitens des wenigstens einen weiteren mobilen Endgerätes von und/oder mit wenigstens einem seitens des wenigstens einen weiteren mobilen Endgerätes mittels einer Recheneinrichtung des wenigstens einen weiteren mobilen Endgerätes ausgeführten Anwendungsprogramms genutzt. Bei dieser erfindungsgemäßen Ausgestaltung stellt das eine mobile Endgerät in einer seiner Datenbanken erfasste Daten diese über die direkte Kommunikationsverbindung dem wenigstens einen weiteren mobilen Endgerät zur Nutzung zur Verfügung. Die Nutzung erfasst dabei vorteilhafterweise sowohl die Nutzung der Daten mit beziehungsweise von einem seitens des einen weiteren mobilen Endgerätes ausgeführten Anwendungsprogramms als auch eine Speicherung der Daten in einer Datenbank des wenigstens einen weiteren mobilen Endgerätes mittels einer entsprechenden Anwendung.

Eine weitere vorteilhafte Ausgestaltung der Erfindung sieht vor, dass wenigstens eine im Rahmen der Ausführung des Anwendungsprogramms erforderliche Eingabe von Informationen seitens des einen mobilen Endgerätes und/oder seitens des wenigstens einen weiteren mobilen Endgerätes erfolgt, wobei bei einer seitens des wenigstens einen weiteren mobilen Endgerätes erfolgenden Eingabe von Informationen diese über die Kommunikationsverbindung an das eine mobile Endgerät übertragen und von diesem umgesetzt werden. Das Anwendungsprogramm kann dabei vorteilhafterweise seitens des einen und/oder seitens des wenigstens einen weiteren mobilen Endgerätes ausgeführt werden.

Eine weitere vorteilhafte Ausgestaltung der Erfindung sieht vor, dass wenigstens eine im Rahmen der Ausführung des Anwendungsprogramms gegebene Ausgabe von Informationen seitens des einen mobilen Endgerätes und/oder seitens des wenigstens einen weiteren mobilen Endgerätes erfolgt, wobei für eine seitens des wenigstens einen weiteren mobilen Endgerätes erfolgende Ausgabe von Informationen diese Informationen über die Kommunikationsverbindung an das wenigstens eine weitere mobile Endgerät übertragen und von diesem wiedergegeben werden. Die Ausführung des Anwendungsprogramms kann dabei vorteilhafterweise seitens des einen mobilen Endgerätes und/oder seitens des wenigstens einen weiteren mobilen Endgerätes erfolgen.

In einer weiteren besonders vorteilhaften Ausgestaltung der Erfindung ist die Nutzungsmöglichkeit eines Anwendungsprogramms und/oder von Daten einer Datenbank eines mobilen Endgerätes durch wenigstens ein weiteres mobiles Endgerät seitens des jeweiligen die Nutzungsmöglichkeit bereitstellenden mobilen Endgerätes vorgebbar. Erfindungsgemäß kann so der Nutzer eines mobilen Endgerätes die Nutzungsmöglichkeiten von Anwendungsprogrammen und/oder von Daten seines mobilen Endgerätes für Nutzer eines weiteren mobilen Endgerätes einstellen, dass heißt insbesondere freigeben beziehungsweise sperren. In einer weiteren vorteilhaften Ausgestaltung der Erfindung wird die Vorgabe seitens des die Nutzungsmöglichkeit bereitstellenden mobilen Endgerätes seitens eines die Nutzungsmöglichkeit in Anspruch nehmenden mobilen Endgerätes und/oder seitens des Mobilfunknetzes erfasst. Eine weitere vorteilhafte Ausgestaltung der Erfindung ist gekennzeichnet durch eine Überprüfung der vorgegebenen Nutzungsmöglichkeit seitens des die Nutzungsmöglichkeit bereitstellenden mobilen Endgerätes und/oder seitens des Mobilfunknetzes.

Eine weitere besonders vorteilhafte Ausgestaltung der Erfindung sieht vor, dass für eine über das Mobilfunknetz erfolgende Kommunikationsverbindung zwischen wenigstens zwei mobilen Endgeräten die Adressierung eines mobilen Endgerätes unter Nutzung einer dem mobilen Endgerät im Mobilfunknetz eindeutig zugeordneten Kennung erfolgt, wobei die Kennung vorzugsweise zumindest die Gerätekennung des mobilen Endgerätes, vorzugsweise die sogenannte IMEI (IMEI: International Mobile Equipment Identity), die dem Nutzer des mobilen Endgerätes zugeordnete netzspezifische Rufnummer, die sogenannte MSISDN (MSISDN: Mobile Station Subscriber ISDN Number; ISDN: Integrated Services Digital Network), die dem Nutzer des mobilen Endgerätes zugeordnete Mobilfunkteilnehmerkennung, vorzugsweise die sogenannte IMSI (IMSI: International Mobile Subscriber Identifikation), und/oder eine dem Nutzer des mobilen Endgerätes zugeordnete Internet-Protokoll-Adresse, eine sogenannte IP-Adresse, vorzugsweise unter Nutzung der Top-Level-Domain ".mob", umfasst.

Vorteilhafterweise weist das eine mobile Endgerät und/oder das wenigstens eine weitere mobile Endgerät wenigstens eine Eingabeeinrichtung zur Erfassung von Informationen und/oder einer Anzeigeeinrichtung zur optischen und/oder akustischen Wiedergabe von Informationen auf.

Eine vorteilhafte Ausgestaltung der Erfindung sieht vor, dass das Anwendungsprogramm den Austausch und/oder die Verwaltung von Nachrichten zwischen und/oder von Kommunikationspartnern des Nutzers eines mobilen Endgerätes ermöglicht.

In einer weiteren vorteilhaften Ausgestaltung der Erfindung ist das Anwendungsprogramm ein Unterhaltungs- und/oder Lernzwecken dienendes Spiel, vorzugsweise ein Spiel mit ereignisgesteuerten Inhalten.

Gegenstand der Erfindung ist ferner ein Mobilfunknetz gemäß dem GSM- und/oder UMTS-Funknetzstandard, dessen Einrichtungen für den Aufbau und/oder die Aufrechterhaltung von Kommunikationsverbindungen zur Ausführung eines erfindungsgemäßen Verfahrens ausgebildet sind.

Ferner betrifft die vorliegende Erfindung ein mobiles Endgerät zur Nutzung in Mobilfunknetzen gemäß dem GSM- und/oder UMTS-Funknetzstandard, welches eine Recheneinrichtung zur Ausführung eines Anwendungsprogramms, wenigstens eine Datenbank mit darin erfassten, von einem Anwendungsprogramm nutzbaren Daten, eine Anzeigeeinrichtung zur optischen und/oder akustischen Wiedergabe von Informationen und/oder wenigstens eine Eingabeeinrichtung zur Erfassung von Informationen aufweist, welches zur Ausführung eines erfindungsgemäßen Verfahrens in einem erfindungsgemäßen Mobilfunknetz ausgebildet ist.

Weitere Einzelheiten, Merkmale und Vorteile der Erfindung werden nachfolgend anhand des in der Figur dargestellten Ausführungsbeispiels der Erfindung näher erläutert. Dabei zeigt:

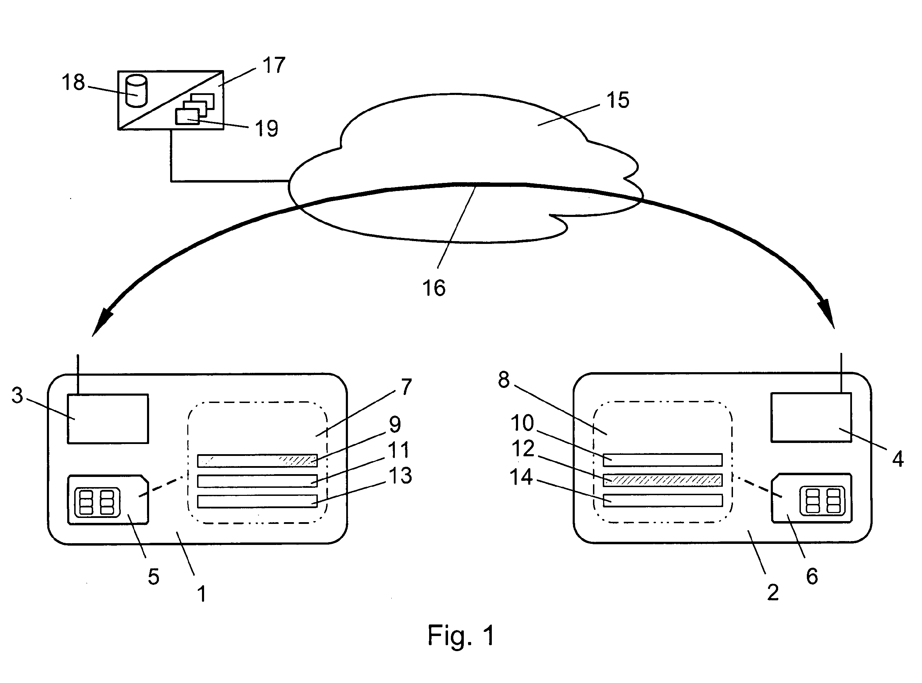

- Fig. 1: in einer schematischen Prinzipdarstellung ein Ausführungsbeispiel für einen erfindungsgemäßen Betrieb von in Mobilfunknetzen nutzbaren mobilen Endgeräten.

Fig. 1 zeigt zwei mobile Endgeräte 1 und 2, welche in einem Mobilfunknetz 15 gemäß dem GSM- und/oder UMTS-Funknetzstandard nutzbar sind.

Das mobile Endgerät 1 weist eine Sende-/ Empfangseinrichtung 3 gemäß dem GSM- und/oder UMTS-Funknetzstandard eine Recheneinrichtung 5 zur Ausführung eines Anwendungsprogramms beziehungsweise der Nutzung einer Datenbank mit darin erfassten, von einem Anwendungsprogramm nutzbaren Daten. Die Recheneinrichtung des mobilen Endgerätes 1 wird vorliegend von einem seitens des mobilen Endgerätes genutzten Mobilfunkteilnehmer-Identifikationsmoduls, einer sogenannten SIM-Karte 5 bereitgestellt. Die Ausführung eines Anwendungsprogramms beziehungsweise die Nutzung einer Datenbank ist in Fig. 1 symbolisch durch das Bezugszeichen 7 gekennzeichnet. Anwendungen und/oder Daten des Anwendungsprogramms beziehungsweise der Datenbank 7 sind in Fig. 1 symbolisch durch die Bezugszeichen 9, 11 und 13 gekennzeichnet.

Das mobile Endgerät 2 weist eine Sende-/ Empfangseinrichtung 4 gemäß dem GSM- und/oder UMTS-Funknetzstandard eine Recheneinrichtung 6 zur Ausführung eines Anwendungsprogramms beziehungsweise der Nutzung einer Datenbank mit darin erfassten, von einem Anwendungsprogramm nutzbaren Daten. Die Recheneinrichtung des mobilen Endgerätes 2 wird vorliegend von einem seitens des mobilen Endgerätes genutzten Mobilfunkteilnehmer-Identifikationsmoduls, einer sogenannten SIM-Karte 6 bereitgestellt. Die Ausführung eines Anwendungsprogramms beziehungsweise die Nutzung einer Datenbank ist in Fig. 2 symbolisch durch das Bezugszeichen 8 gekennzeichnet. Anwendungen und/oder Daten des Anwendungsprogramms beziehungsweise der Datenbank 8 sind in Fig. 2 symbolisch durch die Bezugszeichen 10, 12 und 14 gekennzeichnet.

Die beiden mobilen Endgeräte 1 und 2 weisen weiter, in Fig. 1 nicht explizit dargestellte Anzeigeeinrichtungen zur optischen und/oder akustischen Wiedergabe von Informationen, insbesondere in Form eines Displays zur Wiedergabe von optischen Informationen und in Form eines Lautsprechers zur Wiedergabe von akustischen Informationen auf. Ferner weisen die beiden mobilen Endgeräte 1 und 2 mehrere Tasten aufweisende Tastaturen als Eingabeeinrichtungen zur Erfassung von Informationen auf.

Die beiden mobilen Endgeräte 1 und 2, vorliegend Mobilfunktelefone, sind über eine direkte Kommunikationsverbindung 16 derart miteinander verbindbar, dass seitens des mobilen Endgerätes 1 mittels dessen Recheneinrichtung 3 ausführbare Anwendungsprogramme 7. 9, 11 und 13 seitens des mobilen Endgerätes 2 nutzbar sind. Dabei werden im Rahmen der zwischen den mobilen Endgeräten 1 und 2 direkt erfolgende Kommunikationsverbindung 16 des Mobilfunknetzes weitere ansonsten bei Kommunikationsverbindungen von mobilen Endgeräten 1 und 2 im Mobilfunknetz zur Übertragung von Sprache und/oder Daten genutzte zentrale Vermittlungseinrichtungen des Mobilfunknetzes 15, wie beispielsweise MSC, SMSC oder dergleichen Vermittlungseinrichtungen, die dementsprechend keinen direkten Datenaustausch zwischen zwei mobilen Endgeräten im Mobilfunknetz ermöglichen, vermieden. Die Kommunikationsverbindung 16 des Mobilfunknetzes 15 zwischen den beiden mobilen Endgeräten 1 und 2 erlaubt dabei vorliegend eine definierte Nutzung von seitens der mobilen Endgeräte 1 und 2 vorhandener, mittels einer Recheneinrichtung, welche vorliegend seitens der SIM-Karten 3 beziehungsweise 4 der mobilen Endgeräte 1 beziehungsweise 2 bereitgestellt wird, ausführbare Anwendungsprogramme 7, 9, 11, 13 beziehungsweise 8, 10, 12 und 14 über das Mobilfunknetz 15 von dem mobilen Endgerät 1 auf das mobile Endgerät 2 zugreifend beziehungsweise von dem mobilen Endgerät 2 auf das mobile Endgerät 1 zugreifend. Erfindungsgemäß wird dabei mobilfunknetzseitig zwischen den mobilen Endgeräten 1 und 2 ein Zugriff auf Anwendungsprogramme und/oder Daten ähnlich einer sogenannten Peer-to-Peer-Verbindung in Rechnernetzwerken realisiert.

Bei dem in Fig. 1 dargestellten Ausführungsbeispiel wird vorliegend seitens des mobilen Endgerätes 1 von der Recheneinrichtung 5 ein Anwendungsprogramm 7 mit einer Anwendung 9 ausgeführt. Die Ausführung der Anwendung 9 seitens des mobilen Endgerätes 1 ist dabei vorliegend über die Kommunikationsverbindung 16 des Mobilfunknetzes 15 von einer seitens einer Recheneinrichtung 6 des mobilen Endgerätes 2 ausgeführten Anwendung 12 eines Anwendungsprogramms 18 initiiert. Die von der Anwendung 9 des mobilen Endgerätes 1 gelieferten beziehungsweise bereitgestellten Informationen werden über die direkte Kommunikationsverbindung 16 dem mobilen Endgerät 2, insbesondere der Anwendung 12 des mobilen Endgerätes 2 zur Verfügung gestellt und seitens des mobilen Endgerätes 2 nutzbar gemacht. Die Nutzungsmöglichkeit der Anwendung 9 beziehungsweise der von der Anwendung 9 gelieferten Daten des mobilen Endgerätes 1 seitens des mobilen Endgerätes 2 ist dabei vorliegend seitens des mobilen Endgerätes 1 und/oder seitens einer Recheneinrichtung 17 des Mobilfunknetzes 15 erfasst, vorliegend beispielsweise in einer Datenbank 18 der Recheneinrichtung 17 des Mobilfunknetzes. Die Nutzungsmöglichkeiten der Anwendungen seitens der mobilen Endgeräte 1 und 2 wird dabei mittels entsprechender seitens der Recheneinrichtung 17 des Mobilfunknetzes 15 ausgeführten Anwendungsprogramme 19 überprüft, verwaltet und/oder kontrolliert. Dabei kann seitens der Recheneinrichtung 17 beziehungsweise der von dieser ausgeführten Anwendungsprogramme 19 vorteilhafterweise eine Adressierung der mobilen Endgeräte 1 und 2 untereinander beziehungsweise zueinander erfolgen.

Eine weitere vorteilhafte Ausgestaltung der Erfindung sieht vor, dass seitens der Recheneinrichtung 17 eine den Austausch und/oder die Verwaltung von Nachrichten zwischen und/oder von Kommunikationspartnern dem Nutzer der mobilen Endgeräte 1 und 2 erfolgt, vorteilhafterweise nach Art eines sogenannten Mail-Servers, wobei die Anwendungsprogramme 7 beziehungsweise 8 mit den entsprechenden Anwendungen 9, 11 und 13 beziehungsweise 10, 12 und 14 der mobilen Endgeräte 1 beziehungsweise 2 sogenannte Mobile-Server-Applications sind. Dabei realisieren die Anwendungen 9, 11 und 13 beziehungsweise 10, 12 und 14 sogenannte Web-Server-Applications 9 beziehungsweise 10, Mail-Server-Applications 11 beziehungsweise 12, Game-Applications 13 beziehungsweise 14 oder dergleichen, in Fig. 1 nicht explizit dargestellte Anwendungen. Die Adressierung der mobilen Endgeräte 1 und 2 über den seitens der Recheneinrichtung 17 des Mobilfunknetzes 15 bereitgestellten Mailserver erfolgt vorteilhafterweise über eine IP-Adressierung, vorliegend unter Nutzung der Top-Level-Domain ".mob".

Das in der Figur der Zeichnung dargestellte Ausführungsbeispiel der Erfindung dient lediglich der Erläuterung der Erfindung und ist für diese nicht beschränkend.

### Bezugszeichenliste

- 1: mobiles Endgerät/Mobilfunktelefon
- 2: mobiles Endgerät/Mobilfunktelefon
- 3: Sende-/Empfangseinrichtung mobiles Endgerät (1)
- 4: Sende-/Empfangseinrichtung mobiles Endgerät (2)
- 5: Mobilfunkteilnehmer-Identifikationsmodul (SIM) (mobiles Endgerät (1))
- 6: Mobilfunkteilnehmer-Identifikationsmodul (SIM) (mobiles Endgerät (2))
- 7: Anwendungsprogramme/Datenbank (mobiles Endgerät (1))
- 8: Anwendungsprogramme/Datenbank (mobiles Endgerät (2))
- 9: Anwendung/Daten (Anwendungsprogramme/Datenbank (7))
- 10: Anwendung/Daten (Anwendungsprogramme/Datenbank (8))
- 11: Anwendung/Daten (Anwendungsprogramme/Datenbank (7))
- 12: Anwendung/Daten (Anwendungsprogramme/Datenbank (8))
- 13: Anwendung/Daten (Anwendungsprogramme/Datenbank (7))
- 14: Anwendung/Daten (Anwendungsprogramme/Datenbank (8))
- 15: Mobilfunknetz
- 16: Kommunikationsverbindung
- 17: Recheneinrichtung (Mobilfunknetz (15))
- 18: Datenbank (Mobilfunknetz (15))
- 19: Anwendungsprogramme (Mobilfunknetz (15))

## Patentansprüche

1. Verfahren zum Betreiben von in Mobilfunknetzen (15) gemäß dem GSM- und/oder UMTS-Funknetzstandard nutzbaren mobilen Endgeräten (1, 2),
wobei seitens eines mobilen Endgerätes (1, 2) wenigstens ein Anwendungsprogramm (7, 8, 9, 10, 11, 12, 13, 14) mittels einer Recheneinrichtung ausführbar ist und/oder seitens eines mobilen Endgerätes (1, 2) in wenigstens einer Datenbank (7, 8, 9, 10, 11, 12, 13, 14) von und/oder mit einem Anwendungsprogramm (7, 8, 9, 10, 11, 12, 13, 14) nutzbare Daten (9, 10, 11, 12, 13, 14) erfassbar sind,
**dadurch gekennzeichnet,**
**dass** wenigstens zwei mobile Endgeräte (1, 2) mit wenigstens einer über das Mobilfunknetz (15) erfolgenden Kommunikationsverbindung (16) miteinander verbunden und wenigstens ein seitens eines mobilen Endgerätes (1) mittels einer Recheneinrichtung ausführbares Anwendungsprogramm (7, 9, 11, 13) und/oder die in wenigstens einer Datenbank (7, 9, 11, 13) eines mobilen Endgerätes (1) erfassten von und/oder mit einem Anwendungsprogramm (7, 9, 11, 13) nutzbaren Daten (9, 11, 13) seitens des wenigstens einen weiteren mobilen Endgerätes (2) über die Kommunikationsverbindung (16) genutzt werden.

2. Verfahren nach Anspruch 1, **dadurch gekennzeichnet, dass** im Rahmen der Nutzung seitens des einen mobilen Endgerätes (1) wenigstens ein Anwendungsprogramm (7, 9, 11, 13) mittels einer Recheneinrichtung des einen mobilen Endgerätes (1) ausgeführt wird.

3. Verfahren nach Anspruch 2, **dadurch gekennzeichnet, dass** die Ausführung des Anwendungsprogramms (7, 9, 11, 13) seitens des einen mobilen Endgerätes (1) und/oder des wenigstens einen weiteren mobilen Endgerätes (2) initiiert wird.

4. Verfahren nach Anspruch 1, **dadurch gekennzeichnet, dass** die in wenigstens einer Datenbank (7, 9, 11, 13) des einen mobilen Endgerätes (1) erfassten von und/oder mit einem Anwendungsprogramm (7, 9, 11, 13) nutzbaren Daten (7, 9, 11, 13) über die Kommunikationsverbindung (16) seitens des wenigstens einen weiteren mobilen Endgerätes (2) von und/oder mit wenigstens einem seitens des wenigstens einen weiteren mobilen Endgerätes (2) mittels einer Recheneinrichtung des wenigstens einen weiteren mobilen Endgerätes (2) ausgeführten Anwendungsprogramms (8, 10, 12, 14) genutzt werden.

5. Verfahren nach einem der Anspruch 2 bis 4, **dadurch gekennzeichnet, dass** wenigstens eine im Rahmen der Ausführung des Anwendungsprogramms (7, 8, 9, 10, 11, 12, 13, 14) erforderliche Eingabe von Informationen seitens des einen mobilen Endgerätes (1) und/oder seitens des wenigstens einen weiteren mobilen Endgerätes (2) erfolgt, wobei bei einer seitens des wenigstens einen weiteren mobilen Endgerätes (2) erfolgenden Eingabe von Informationen diese über die Kommunikationsverbindung (16) an das eine mobile Endgerät (1) übertragen und von diesem umgesetzt werden.

6. Verfahren nach einem der Ansprüche 2 bis 5, **dadurch gekennzeichnet, dass** wenigstens eine im Rahmen der Ausführung des Anwendungsprogramms (7, 8, 9, 10, 11, 12, 13, 14) gegebene Ausgabe von Informationen seitens des einen mobilen Endgerätes (1) und/oder seitens des wenigstens einen weiteren mobilen Endgerätes (2) erfolgt, wobei für eine seitens des wenigstens einen weiteren mobilen Endgerätes (2) erfolgende Ausgabe von Informationen diese über die Kommunikationsverbindung (16) an das wenigstens eine weitere mobile Endgerät (2) übertragen und von diesem wiedergegeben werden.

7. Verfahren nach einem der Ansprüche 1 bis 6, **dadurch gekennzeichnet, dass** die Nutzungsmöglichkeit eines Anwendungsprogramms (7, 8, 9, 10, 11, 12, 13, 14) und/oder von Daten (9, 10, 11, 12, 13, 14) einer Datenbank eines mobilen Endgerätes (1, 2) durch wenigstens ein weiteres mobiles Endgerät (1, 2) seitens des jeweiligen die Nutzungsmöglichkeit bereitstellenden mobilen Endgerätes (1, 2) vorgebbar ist.

8. Verfahren nach Anspruch 7, **dadurch gekennzeichnet, dass** die Vorgabe seitens des die Nutzungsmöglichkeit bereitstellenden mobilen Endgerätes (1, 2) seitens eines die Nutzungsmöglichkeit inanspruchnehmenden mobilen Endgerätes (1, 2) und/oder seitens des Mobilfunknetzes (15) erfasst wird.

9. Verfahren nach Anspruch 7 oder Anspruch 8, **gekennzeichnet durch** eine Überprüfung der vorgegebenen Nutzungsmöglichkeit seitens des die Nutzungsmöglichkeit bereitstellenden mobilen Endgerätes (1, 2) und/oder seitens des Mobilfunknetzes (15).

10. Verfahren nach einem der Ansprüche 1 bis 9, **dadurch gekennzeichnet, dass** für eine über das Mobilfunknetz (15) erfolgende Kommunikationsverbindung (16) zwischen wenigstens zwei mobilen Endgeräten (1, 2) die Adressierung eines mobilen Endgerätes (1, 2) unter Nutzung einer dem mobilen Endgerät (1, 2) im Mobilfunknetz (15) eindeutig zugeordneten Kennung erfolgt, wobei die Kennung vorzugsweise zumindest die Gerätekennung (IMEI) des mobilen Endgerätes (1, 2), die dem Nutzer des mobilen Endgerätes (1, 2) zugeordnete netzspezifische Ruf-Nummer (MSISDN), die dem Nutzer des mobilen Endgerätes (1, 2) zugeordnete Mobilfunkteilnehmerkennung (IMSI) und/oder eine dem Nutzer des mobilen Endgerätes (1, 2) zugeordnete Internet-Protocol-Adresse (IP-Adresse), vorzugsweise unter Nutzung der Top-Level-Domain .mob, umfasst.

11. Verfahren nach einem der Ansprüche 1 bis 10, **dadurch gekennzeichnet, dass** das eine mobile Endgerät (1) und/oder das wenigstens eine weitere mobile Endgerät (2) wenigstens eine Eingabeeinrichtung zur Erfassung von Informationen und/oder eine Anzeigeeinrichtung zur optischen und/oder akustischen Wiedergabe von Informationen aufweist.

12. Verfahren nach einem der Ansprüche 1 bis 11, **dadurch gekennzeichnet, dass** das Anwendungsprogramm (7, 8, 9, 10, 11, 12, 13, 14) den Austausch und/oder die Verwaltung von Nachrichten zwischen und/oder von Kommunikationspartnern des Nutzers eines mobilen Endgerätes (1, 2) ermöglicht.

13. Verfahren nach einem der Ansprüche 1 bis 12, **dadurch gekennzeichnet, dass** das Anwendungsprogramm (7, 8, 9, 10, 11, 12, 13, 14) ein Unterhaltungs- und/oder Lernzwecken dienendes Spiel ist, vorzugsweise ein Spiel mit ereignisgesteuerten Inhalten.

14. Mobilfunknetz (15) gemäß dem GSM- und/oder UMTS-Funknetzstandard,
**dadurch gekennzeichnet,**
**dass** dessen Einrichtungen (17, 18, 19) für den Aufbau und/oder die Aufrechterhaltung von Kommunikationsverbindungen (16) zur Ausführung eines Verfahrens nach einem der Ansprüche 1 bis 13 ausgebildet sind.

15. Mobiles Endgerät (1, 2) zur Nutzung in Mobilfunknetzen (15) gemäß dem GSM- und/oder UMTS-Funknetzstandard, welches eine Recheneinrichtung zur Ausführung eines Anwendungsprogramms (7, 8, 9, 10, 11, 12, 13, 14), wenigstens eine Datenbank (7, 8, 9, 10, 11, 12, 13, 14) mit darin erfassten von einem Anwendungsprogramm (7, 8, 9, 10, 11, 12, 13, 14) nutzbaren Daten (9, 10, 11, 12, 13, 14), eine Anzeigeeinrichtung zur optischen und/oder akustischen Wiedergabe von Informationen und/oder wenigstens eine Eingabeeinrichtung zur Erfassung von Informationen aufweist,
**dadurch gekennzeichnet,**
**dass** dieses zur Ausführung eines Verfahrens nach einem der Ansprüche 1 bis 13 in einem Mobilfunknetz (15) nach Anspruch 14 ausgebildet ist.
